# EUROPEAN PATENT SPECIFICATION

(11) **EP 3 545 798 B1**
(45) Date of publication and mention of the grant of the patent: **08.09.2021**
(21) Application number: 17901695.1
(22) Date of filing: 22.03.2017
(51) Int. Cl.: A47F 5/00, A47B 57/48, A47B 96/06

(54) **MALE PIN AND FEMALE HOUSING SET FOR A DISPLAY STAND WITH A QUICK-ENGAGEMENT ATTACHMENT SYSTEM**
STIFT UND GEHÄUSE FÜR EINEN ANZEIGESTÄNDER MIT EINEM SCHNELLRASTBEFESTIGUNGSSYSTEM
ENSEMBLE PIÈCE MÂLE ET LOGEMENT FEMELLE POUR PRÉSENTOIR, AVEC SYSTÈME DE FIXATION PAR ENTRÉE EN PRISE RAPIDE

(43) Date of publication of application: 02.10.2019
(73) Proprietor: Kwo Tzuo, Chung, 02021-030 Sao Paulo (BR)
(72) Inventor: Kwo Tzuo, Chung, 02021-030 Sao Paulo (BR)
(74) Representative: Elzaburu S.L.P.
(86) International application number: PCT/BR2017/050068
(87) International publication number: WO 2018/170562

(56) References cited:
- EP-A2- 2 644 059
- BR-A2- PI1 104 563
- BR-A2-102015 012 822
- GB-A- 2 371 740
- GB-A- 2 380 534
- US-A- 4 430 947

## Description

The present specification relates to constructive adaptations performed on both the male pin for fastening in recesses near the extremities of the front edge of the shelf, and the female housing for fastening in recesses in the lateral walls of the display stand, thus obtaining an unprecedented quick-engagement attachment system for these elements.

According to the invention the male pin comprises two rear hinged flaps incorporated in its coupling end, featuring opposing inner surfaces bearing coupling studs and coinciding cavities along with coupling lugs and coinciding cradles. Said rear flaps are hinged so as to allow locking between the studs and cavities and also the lugs and cradles that couple together between the recesses at the extremities of the frontal edge of the shelf, positioning the male pin at the external lateral corner, leaving its coupling end exposed. With such a structure, it is possible to manually or automatically glue the shelf, and thus the male pin can be inserted at a subsequent stage, upon the assembly of the display stand.

The female housing, in turn, bears a front track incorporating a rear clip. By means of this rear clip, the female housing is simply inserted into a recess in the lateral wall of the display. With such a structure, it is possible to glue the lateral wall manually or automatically, and thus the female housing can also be inserted at a subsequent stage, also upon the assembly of the display stand. Via its rear clip, the female housing can be simply inserted into recesses in solid walls and tubular columns, or points which are hard to reach in other types of display stand.

Furthermore, the pins and female housings can be carried separately from the cardboard material during the transport of the display to its point of use.

### STATE OF THE ART

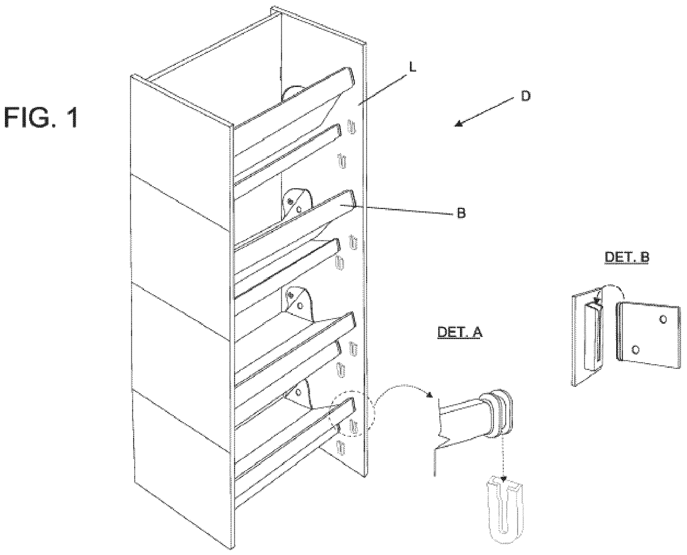

A type of product display stand that is well-known and widely used is the stand protected by document PI 1104563-9, filed on September 2nd 2011 and entitled "SET OF COUPLING PINS FOR LOCKING SYSTEM WITH HORIZONTAL ADJUSTMENT OF THE SHELVES, IN DISPLAY STAND" This display stand has been protected by the same inventor of the application to be disclosed below. Said cardboard display stand of PI 1104563-9, as explained in its content, features at the inner surface of its two lateral walls, plastic female housings (comprising a flat side and track) perfectly aligned for the coupling of the corresponding plastic male pins (comprising a flat side and coupling peg), attached in turn to the lateral edges, externally to the shelves. When assembling the display stand at the sales outlet the shelves are hinged at the rear wall and, when lowered, the coupling pegs of the male pins couple with the tracks on the female housings on the lateral walls. In this way, the shelves are locked horizontally to receive the products to be displayed. This locking system may be seen in figure 1 and its details A and B, drawings included by way of example, having been taken from the aforementioned document PI 1104569-9.

Currently, for the attachment of the female housing, in the cutting and creasing project, the execution of holes is foreseen in the closing flap that hinges over the lateral wall of the stand. Thus, after the flat display stand leaves the cutting and creasing machine, the closing of the lateral wall may be performed manually when, at the production line, the operator applies glue to the inner surface of the lateral wall. Next, the female housing is inserted by its track into the hole in the closing flap and is in turn adjusted so that the flat side of said female housing settles against the inner surface of the lateral wall which will, together with another sheet, be glued to form a double sheet. In this way, the lateral double-thickness walls of the display stand, whereon the tracks of the female housings are exposed, are formed.

At the same production line, the operator applies glue manually over the inner surface of the front edge of the shelf and also over the inner surface of its frontal closing flap. Next, on this inner surface of the front edge of the shelf, the flat side of the male pin is seated and then fixed by the curing of the glue, maintaining its position in such a way that its coupling peg is exposed externally and laterally, thus hinging the aforementioned frontal closing flap. In this way, the front edge of the shelf is assembled, with a double-thickness sheet and the coupling studs of the male pins left exposed externally and laterally so as to coincide with the tracks of the female housings on the lateral walls of the display stand.

As may be seen, manual stages are required for the application of glue, the seating and adjustment of the female housing for the passage of its track through the hole, its articulation and the curing time for the definitive attachment of the flat side of the male pin and even the closing of the flaps to form the double-thickness sheets for both the lateral walls and the shelves.

In the case of automatic gluing of the lateral walls and of the shelves, the closing is performed by the passage of glue rollers between the double sheets along a work surface. In this system, both the male pin and the female housing must be affixed later, likewise requiring precise recesses and measurements in the assembly stage of the display structure.

Evidently, procedures such as the manual or automatic gluing of the walls and shelves require time and some skill from the operator to make them more agile, even bringing additional stages to the process, which might lead to marking errors in the correct location of the female housing and male pin, adversely affecting the display stand production line. A further male pin and female housing set is known from GB 2 380 534 A.

### OBJECTIVE OF THE PATENT

The invention relates to the construction and attachment system of both the male pin and the female housing. The project enables either the manual or the automatic gluing of these parts of the display stand (shelves and walls) without the male pin and the female housing, expediting that stage of the production line. After this manual or automatic gluing stage, only when the display structure is assembled will the male pin and the female housing will be affixed to the recesses at the extremities of the frontal edge of the shelf and into the recesses in the lateral walls of the display stand, respectively.

The female housing may also be inserted by its clip in solid display walls, in tubular columns or points whose access is difficult.

As an additional advantage, the display can be transported flat, stacked, without the pins or female housings, which can be accommodated separately. As a result, the stacking is less high (more units can be stacked) and there is no problem with unwanted creases due to the weight resting on the female housings, which end up marking the cardboard forming the display stand. Having been explained briefly, the male pin and female housing will now be described in greater detail.
Figure 1 portrays a display stand such as that mentioned in the state of the art, revealing in details A and B the female housings on the lateral walls with which the male pins on the shelf align.
   The following figures, from 2 to 7, relate to the construction and the system of the male pin and female housing set, as well as their affixing systems:
Figure 2 - portrays perspective views of the male pin, shown from its coupling end and rear hinged flaps while open, prior to locking, and also with the rear flaps closed, in the post-locking position;
Figure 3 - portrays perspective front, side and rear views of the female housing, showing that a rear clip is incorporated on its flat side;
Figure 4 - portrays a perspective view, showing the male pin and its flaps in a position for its locking into the recesses at the extremities of the frontal edge of the shelf. As can be seen from the indicative arrows, the coupling pegs are aligned with the cavities while the lugs are aligned with the cradles, passing through the recesses at the extremities of the front edge of the shelf;
Figure 5- portrays a view as in the previous figure, showing that after the closure of the flaps, the male pins are locked with their coupling ends positioned externally and laterally at the frontal edge of the shelf;
Figure 6 - portrays a partial perspective view of one tier of the display stand, as used at a sales outlet. As may be seen, the clips of the female housings are lodged in the recesses in the lateral walls of the display stand, locating their tracks to engage the coupling ends of the male pins attached to the shelves.
Figure 7 - portrays a perspective view of the female housing being used with the tubular columns of a display stand. As may be seen from the sequence shown at the top of the page, it merely requires the execution of a slot for the insertion of the clip of the female housing. The same is true in hard-to-reach points of other types of display stand.

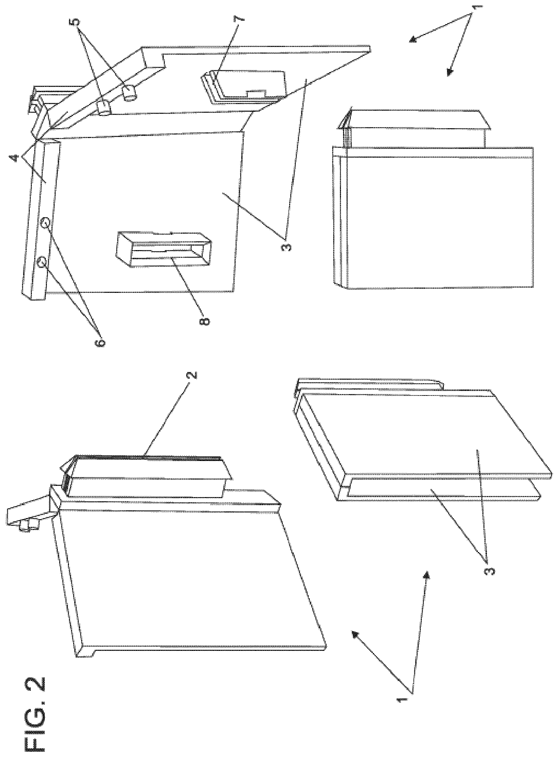

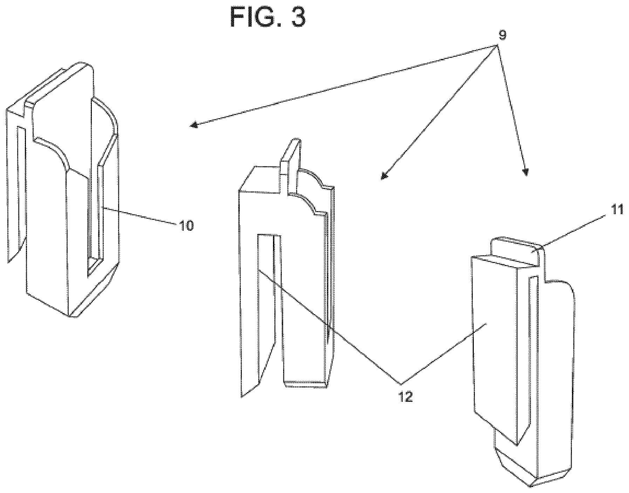

In accordance with the attached drawings, the "MALE PIN AND FEMALE HOUSING SET FOR A DISPLAY STAND, WITH A QUICK-ENGAGEMENT ATTACHMENT SYSTEM" which is the object of the present invention consists of an assembly especially developed for its application in display stands (D) of the type portrayed in Figure 1 of the state of the art, said assembly comprising a male pin (1) with a coupling end (2) incorporating two rear hinged flaps (3) featuring on their inner surfaces, upper swinging sections (4) with studs (5) coinciding with coupling cavities (6), and also lugs (7) coinciding with coupling cradles (8) as shown in the sequence in Figure 2. The male pin (1) acts with a female housing (9) featuring a frontal track (10) incorporating, on its flat side (11), a rear clip (12), as shown in the sequence in Figure 3.

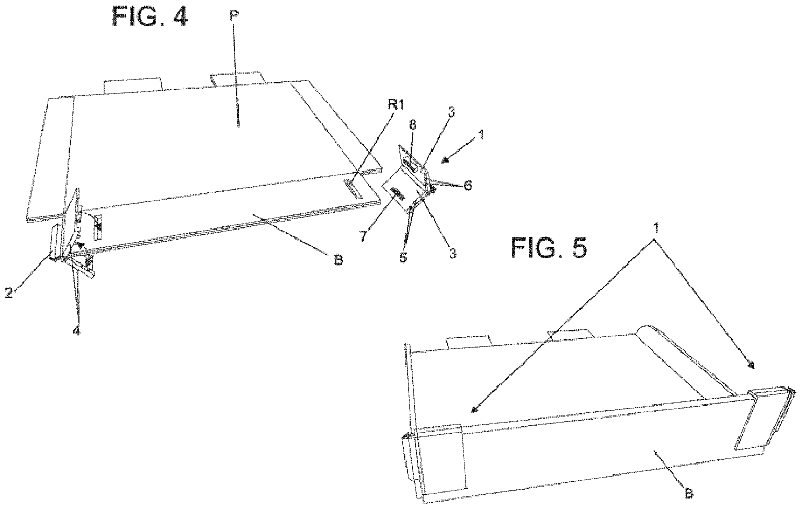

The set of male pin (1) and female housing (9) being thus constituted, they are fixed in the recesses (R1) near the extremities of the frontal edges (B) of the shelves (P) and in the recesses (R2) in the lateral walls (L) of display stands (D) respectively, subsequent to the manual or automatic gluing stage (performed with conventional equipment). For their application, during the assembly stage of the display stand (D), as shown in Fig. 4, the flaps (3) are aligned with the recess (R1) in the front edge (B) of the shelf (P) thus being articulated in such a way as to enable the simultaneous coupling by pressure of the studs (5) and cavities (6) and of the lugs (7) and cradle (8) subsequent to the passage of these elements through the aforementioned recess (R1), being locked by means of a quick-engagement system in a procedure performed at both sides of the frontal edge (B) of the shelf (P). As shown in Fig. 5, after the quick engagement, the lateral extremities of the front edge (B) of the shelf (P) have the coupling ends (2) of the male pins (1) positioned externally.

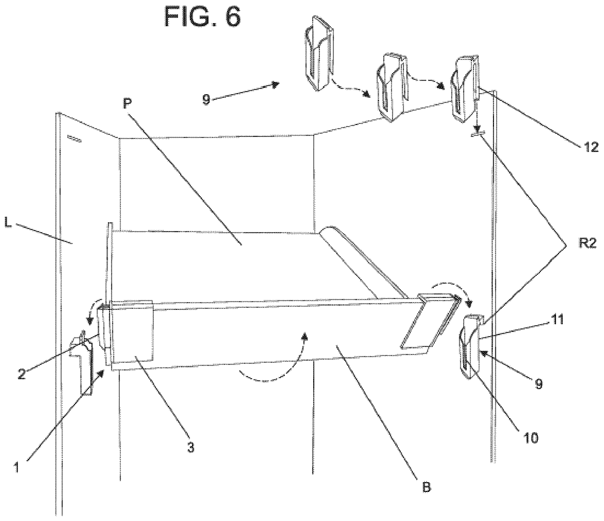

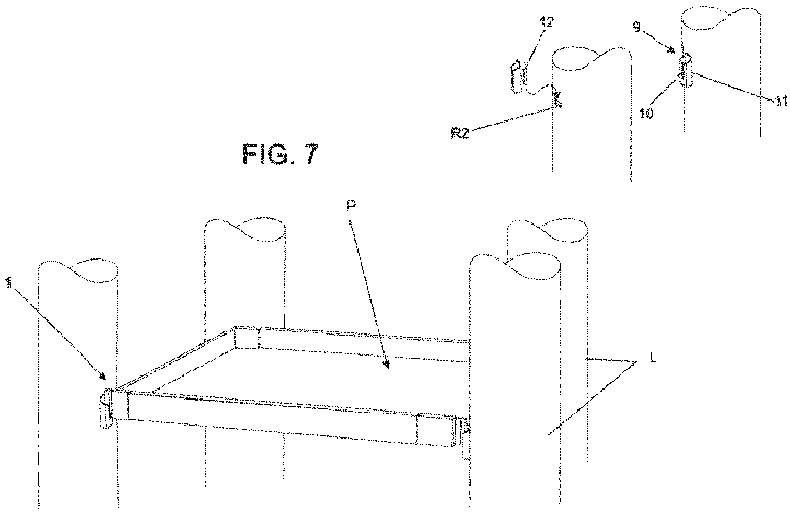

For the attachment of the female housing (9), as shown in Fig. 6, it is simply inserted into the recess (R2) in the lateral wall (L) by means of its rear clip (12). With the mere insertion of several units, the flat sides (11) of the female housings (9) rest against the inner surfaces along the two lateral walls (L) for the positioning of their frontal tracks (10), which will house the coupling ends (2) of the corresponding male pins (1) on the shelves (P). Due to its simple insertion, by means of its rear clip (12), the female housing (9) may be attached to the solid cardboard walls of display stands or critical points of display stands of other types, such as cut-outs (R2) in tubular columns, as shown in the sequence in Figure 7, likewise positioning its frontal tracks (10) to house the coupling ends (2) of the male pins (1) on the shelves (P).

## Claims

1. A male pin (1) and female housing (9) set for a display stand, developed for its application in display stands (D), comprising a male pin (1) with a coupling end (2), wherein said male pin (2) includes two rear hinged flaps (3) and also lugs (7) coinciding with a coupling cradle (8); said male pin (1) being complemented with the female housing (9) featuring a frontal track (10) **characterised in that** said two rear hinged flaps (3) feature on their inner surfaces, upper swinging sections (4) with studs (5) coinciding with coupling cavities (6), and **in that** said female housing (9) incorporates on its flat side (11), a rear clip (12).

2. A process for the quick engagement of male pin and female housing sets for a display stand according to claim 1 whereby for each male pin the alignment of the rear hinged flaps (3) of the male pin (1) and a recess (R1) at the extremity of the frontal edge (B) of a shelf (P) is followed by the simultaneous closure under pressure of the coupling between studs (5) and cavities (6) and of the lug (7) and cradle (8), locked through the aforementioned recess (R1), and wherein respective pairs of male pins (1) are fastened by means of their coupling ends (2) positioned externally, on both sides of the frontal edge (B) of the shelf (P), while the rear clips (12) of corresponding pairs of female housings (9) are inserted into recesses (R2) in the lateral walls (L) of the display stand (D), exposing their frontal tracks (10) on a level with the coupling ends (2) of the pairs of male pins (1).

3. A process according to claim 2, **characterized in that** the coupling of the male pin (1) and female housing (9) at the extremities of the frontal edges (B) of the shelves (P) and on the lateral walls (L) respectively occurs only subsequent to the manual or automatic gluing stage of the sections of the display stand (D).

## Patentansprüche

1. Ein Stift (1) und ein Gehäuse (9) für einen Anzeigeständer, der für seine Anwendung in Anzeigeständern (D) entwickelt wurde, umfassend einen Stift (1) mit einem Kupplungsende (2), wobei der Stift (2) zwei hintere schwenkbare Klappen (3) und auch Laschen (7) umfasst, die mit einer Kupplungswiege (8) zusammenfallen; wobei der Stift (1) mit dem Gehäuse (9) ergänzt wird, das eine vordere Spur (10) aufweist, **dadurch gekennzeichnet, dass** die beiden hinteren gelenkigen Klappen (3) an ihren Innenflächen obere Schwenkabschnitte (4) mit Zapfen (5) aufweisen, die mit Kupplungshohlräumen (6) zusammenfallen, und dass das Gehäuse (9) an seiner flachen Seite (11) eine hintere Klammer (12) aufweist.

2. Ein Verfahren zum schnellen Einrasten von Stift und Gehäuse für einen Anzeigeständer nach Anspruch 1, wobei für jeden Stift auf die Ausrichtung der hinteren Klapplaschen (3) des Stifts (1) und einer Aussparung (RI) am Ende der Stirnkante (B) eines Regalbretts (P) das gleichzeitige Schließen der Kupplung zwischen Zapfen (5) und Hohlräumen (6) und der Lasche (7) und Wiege (8) unter Druck folgt, verriegelt durch die vorgenannte Aussparung (RI), und bei dem die jeweiligen Paare von Stiften (1) mittels ihrer Kupplungsenden (2), die außen auf beiden Seiten der Stirnkante (B) des Regals (P) positioniert sind, befestigt werden, während die hinteren Klammern (12) der entsprechenden Paare von Gehäusen (9) in Aussparungen (R2) in den Seitenwänden (L) des Anzeigeständers (D) eingesetzt werden, wobei ihre vorderen Bahnen (10) auf einer Höhe mit den Kupplungsenden (2) der Paare von Stiften (1) freigelegt werden.

3. Ein Verfahren nach Anspruch 2, **dadurch gekennzeichnet, dass** die Kopplung des Stifts (1) und des Gehäuses (9) an den Enden der Stirnkanten (B) der Regalböden (P) bzw. an den Seitenwänden (L) erst im Anschluss an die manuelle oder automatische Klebephase der Abschnitte des Anzeigeständers (D) erfolgt.

## Revendications

1. Ensemble de broche mâle (1) et de boîtier femelle (9) pour un présentoir, développé pour son application dans des présentoirs (D), comprenant une broche mâle (1) avec une extrémité d'accouplement (2), dans lequel ladite broche mâle (2) comprend deux volets articulés arrière (3) et également des pattes (7) coïncidant avec un berceau d'accouplement (8) ; ladite broche mâle (1) étant complétée par le boîtier femelle (9) présentant une piste frontale (10) **caractérisée en ce que** lesdits deux volets articulés arrière (3) présentent sur leurs surfaces internes, des sections oscillantes supérieures (4) avec des goujons (5) coïncidant avec des cavités d'accouplement (6), et **en ce que** ledit boîtier femelle (9) incorpore sur son côté plat (11), un clip arrière (12).

2. Procédé pour l'engagement rapide d'ensembles de broches mâles et de boîtiers femelles pour un présentoir selon la revendication 1, dans lequel, pour chaque broche mâle, l'alignement des rabats articulés arrière (3) de la broche mâle (1) et d'un évidement (RI) à l'extrémité du bord frontal (B) d'une étagère (P) est suivi par la fermeture simultanée sous pression de l'accouplement entre les goujons (5) et les cavités (6) et de la patte (7) et du berceau (8), verrouillés à travers l'évidement (RI) susmentionné, et dans lequel les paires respectives de goujons mâles (1) sont fixées au moyen de leurs extrémités d'accouplement (2) positionnées à l'extérieur, des deux côtés du bord frontal (B) de l'étagère (P), tandis que les clips arrière (12) des paires correspondantes de boîtiers femelles (9) sont insérés dans des évidements (R2) dans les parois latérales (L) du présentoir (D), exposant leurs pistes frontales (10) au niveau des extrémités d'accouplement (2) des paires de goujons mâles (1).

3. Procédé selon la revendication 2, **caractérisé en ce que** l'accouplement de la broche mâle (1) et du boîtier femelle (9) aux extrémités des bords frontaux (B) des étagères (P) et sur les parois latérales (L) respectivement n'intervient qu'après l'étape de collage manuel ou automatique des sections du présentoir (D).
